# EUROPÄISCHE PATENTSCHRIFT

(11) **EP 3 133 034 B1**
(45) Veröffentlichungstag und Bekanntmachung des Hinweises auf die Patenterteilung: **07.12.2022**
(21) Anmeldenummer: 16173356.3
(22) Anmeldetag: 07.06.2016
(51) Int. Cl.: B65G 47/08, B65G 43/08

(54) **VORRICHTUNG UND VERFAHREN ZUM ZUFÜHREN VON PRODUKTEN**
DEVICE AND METHOD FOR FEEDING PRODUCTS
DISPOSITIF ET PROCEDE D'ACHEMINEMENT DE PRODUITS

(30) Priorität: 12.08.2015 DE 102015215366
(43) Veröffentlichungstag der Anmeldung: 22.02.2017
(73) Patentinhaber: Demaurex S.A, 1024 Ecublens (CH)
(72) Erfinder: Vouillamoz, Christian, 1926 Fully (CH); Gaille, Fabrice, 1004 Lausanne (CH)
(74) Vertreter: Braun, André jr.

(56) Entgegenhaltungen:
- CH-A- 488 593
- JP-A- 2001 002 232
- JP-A- 2010 202 341
- JP-B2- 3 255 215
- US-A- 3 109 529
- US-A- 4 678 073
- US-A- 6 019 213
- US-A1- 2003 080 139
- US-A1- 2003 105 550
- US-A1- 2015 041 282

## Beschreibung

Die Erfindung geht aus von einer Vorrichtung und einem Verfahren zum Zuführen von Produkten nach der Gattung der unabhängigen Ansprüche.

### Stand der Technik

US 6019213 A offenbart eine Vorrichtung zum Zuführen von Produkten nach dem Oberbegriff des Anspruchs 1, und ein Verfahren zum Zuführen von Produkten nach dem Oberbegriff des Anspruchs 10.

Aus der DE 372110 15 1 ist bereits eine Vorrichtung zur Zuführung von Packungen zu einer Packmaschine bekannt. Hierbei werden die Packungen zur Vermeidung des Beilegens von Hand automatisch aus einem Magazin mithilfe eines Schiebers in Querrichtung auf ein Förderband geschoben und einer Packmaschine zugeführt. Im Umlenkbereich der Packungen auf einem zweiten Förderband ist eine Lichtschranke angeordnet, mit deren Hilfe ein in diesem Bereich auftretender Stau erkannt werden kann. Dadurch kann die Vorrichtung sofort abgeschaltet werden.

Aus der US 2015/0041282 A1 ist ein System zur Auflösung eines möglichen Produktstaus bekannt für rotierende Produktförderer.

JP 2010/202341 A1 offenbart eine Produktzuführung, welche die Produkte über eine schüsselförmige Zuführung zuführt.

US 2003/0080139 A1 offenbart eine Zuführung vororientierter Teile.

Aus der CH 488593 A ist eine Aufreihvorrichtung bekannt.

Der Erfindung liegt die Aufgabe zugrunde, die gattungsgemäße Vorrichtung weiter zu automatisieren. Die Aufgabe wird gelöst durch die Merkmale der unabhängigen Ansprüche 1 und 10.

### Vorteile der Erfindung

Die erfindungsgemäße Vorrichtung und Verfahren mit den Merkmalen der unabhängigen Ansprüche haben demgegenüber den Vorteil, dass ein möglicher Produktstau automatisch behoben werden kann. Manuelle Eingriffe des Benutzers sind somit nicht mehr erforderlich. Außerdem kann ein Produktstau schneller behoben werden. Dies wird möglich, indem zumindest ein Auswurfmittel vorgesehen ist zum Entfernen zumindest eines auf der Zuführung befindlichen und sich stauenden Produkts und indem das Auswurfmittel zwischen Zuführung und Transportsystem angeordnet ist. Gerade in diesem Bereich stauen sich die Produkte häufig, sodass eine entsprechende Entfernung sicher möglich wird. Ferner ist zum Entfernen zumindest eines sich stauenden Produkts das Transportsystem in einer vom Normalbetrieb abweichenden Betriebsart angesteuert, nämlich entgegen der sonst üblichen Transportrichtung. Gerade durch eine entgegengesetzte Bewegung können Seitenkanten möglicher Fächer des Transportsystems stauende Produkte aus dem Übergabebereich entfernen bzw. beitragen, diese zu entfernen.

In einer zweckmäßigen Weiterbildung ist als Auswurfmittel zumindest eine Düse, vorzugsweise einen Luftstrom erzeugende Düse verwendet. Diese zeichnet sich durch eine einfache Handhabung und zuverlässiges Entfernen der sich stauenden Produkte aus.

In einer zweckmäßigen Weiterbildung ist zumindest ein weiteres Auswurfmittel vorgesehen, welches entfernt von dem ersten Auswurfmittel angeordnet ist zur Unterbindung der Zuführung weiterer Produkte. Dadurch wird zuverlässig vermieden, dass weitere einlaufenden Produkte einen Produktstau vergrößern. Dadurch lässt sich die Zuführung weiterhin vorzugsweise kontinuierlich bewegen, ohne dass der übliche Produktionsablauf gestört würde.

In einer zweckmäßigen Weiterbildung ist vorgesehen, dass zumindest ein Auswurfmittel so angeordnet ist, dass zumindest ein sich stauendes Produkt entgegengesetzt zur Transportrichtung des Transportmittels im Normalbetrieb ausgestoßen werden kann. Gerade eine solche Anordnung ist deswegen vorteilhaft, da das Transportmittel abweichend von der üblichen Transportrichtung diese Auswurfbewegung unterstützen kann.

In einer zweckmäßigen Weiterbildung ist zumindest eine Seitenführung zur Führung zumindest eines auf der Zuführung befindlichen Produkts vorgesehen. Bevorzugt ist die zumindest eine Seitenführung beweglich ausgebildet. Dadurch können Produkte positionsgenau dem Transportsystem zugeführt werden. Auf der anderen Seite kann durch die bewegliche Anordnung der Seitenführung erreicht werden, dass sich stauende Produkte auch im Bereich der Seitenführung zuverlässig abgeführt werden können. Dies trägt zu einer sicheren und zuverlässigen Behebung des Produktstaus bei.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung ist in der Zeichnung dargestellt und wird nachfolgend näher beschrieben.

Es zeigen:
Figur 1 eine Draufsicht auf die Vorrichtung im noch nicht gestauten Zustand,
Figur 2 eine Draufsicht auf die Vorrichtung gemäß Figur 1 bei Einleitung der Gegenmaßnahmen zur Auflösung des Produktstaus,
Figur 3 eine Draufsicht auf die Vorrichtung gemäß den Figuren 1 und 2 nach Beseitigung des Produktstaus,
Figur 4 eine Draufsicht eines weiteren Ausführungsbeispiels ohne Seitenführungen,
Figur 5 eine perspektivische Darstellung der Vorrichtung nach Figur 4.

Eine Zuführung 12 führt Produkte 10 in Zufuhrrichtung 18 einem Transportsystem 20 zu. Das Transportsystem 20 weist hierzu entsprechende Fächer 26 zur Aufnahme eines jeweiligen Produkts 10 auf. Das Transportsystem 20 bewegt sich in einer Transportrichtung 21, welche im Ausführungsbeispiel senkrecht zu der Zufuhrrichtung 18 der Zuführung 12 orientiert ist. Seitlich an der Zuführung 12 ist ein erstes Auswurfmittel 14 angeordnet. Das Auswurfmittel 14 ist vorzugsweise an einer Stelle der Zuführung 12 angeordnet, die entfernt ist von der Schnittstelle mit dem Transportsystem 20. Die Zuführung 12 ist an dieser Stelle so ausgebildet, dass das Auswurfmittel 14 bei Aktivierung ein in seinem Erfassungsbereich befindliches Produkt 10 seitlich von der Zuführung 12 bewegen kann, sodass es die Zuführung 12 verlässt und nicht mehr dem Transportsystem 20 zugeführt wird. Das Auswurfmittel 14 bewirkt somit, dass keine weiteren Produkte 10 hin zum Transportsystem 20 bzw. zum Übergabebereich bewegt werden. Zuführung 12 und Transportsystem 20 sind senkrecht zueinander angeordnet.

Am Ende der Zuführung 12 in Richtung des Übergabebereichs zum Transportmittel 20 ist ein (weiteres) Auswurfmittel 16 angeordnet. Das weitere Auswurfmittel 16 ist bevorzugt an einer solchen Stelle angeordnet, wo ein Produktstau auftreten kann, insbesondere in dem Übergabebereich zwischen Zuführung 12 und Transportsystem 20.

Die beiden Auswurfmittel 14,16 können unabhängig voneinander angesteuert werden. Dadurch wird erreicht, dass einerseits bedarfsgenau der gestaute Bereich freigegeben wird, während das Auswurfmittel 14 sicherstellt, dass keine neuen Produkte 10 dem gestauten Bereich zugeführt werden. Zudem kann die Zuführung 12 fortlaufend kontinuierlich betrieben werden, selbst wenn ein Produktstau erkannt wurde.

In diesem Übergabebereich bzw. Produktstau gefährdeten Bereich ist auch ein Sensor 28 angeordnet, der beispielsweise mittels optischer oder kapazitiver oder sonstiger Systeme das Vorhandensein eines Produktstaus erkennt. Hierzu könnte der Sensor 28 seitlich oder auch oberhalb des Übergabebereiches in geeigneter Weise angeordnet sein.

Um die möglicherweise unterschiedlich positionierten Produkte 10 in eine definierte Übergabeposition zur Übergabe zu dem Transportsystem 20 zu bringen, sind Seitenführungen 22,24 vorgesehen. Diese sind jedoch nicht zwingend erforderlich oder können lediglich in Form einer einzigen Seitenführung 22 ausgeführt sein. Die Seitenführungen 22,24 sind vorzugsweise zusammenlaufend bzw. trichterförmig angeordnet. Zumindest eine Seitenführung 22 ist beweglich ausgebildet. So dient die Beweglichkeit der Seitenführung 22 insbesondere dazu, stauende Produkte 10 durch das Auswurfmittel 16 seitlich von der Zuführung 12 zu entfernen. Eine zurückgezogene Seitenführung 22 ermöglicht das Ausstoßen des Produkts 10 durch das Auswurfmittel 16. Vorzugsweise ist diejenige Seitenführung 22,24 zumindest beweglich angeordnet, die an der dem Auswurfmittel 16 gegenüberliegenden Seite der Zuführung 12 angeordnet ist.

Das Transportsystem 20 soll über die Zuführung 12 mit Produkten 10 befüllt werden. Das Transportsystem 20 führt die regelmäßig in den Fächern 21 befindlichen Produkte 10 weiteren Verarbeitungsschritten wie beispielsweise einer Verpackungsmaschine oder ähnlichem zu. Das Transportsystem 20 kann beispielsweise als Bandförderer ausgebildet sein. Das Transportsystem 20 lässt sich über nicht dargestellte Antriebe in Bewegungsrichtung 21, aber auch entgegen der im Normalbetrieb üblichen Bewegungsrichtung 21 bewegen.

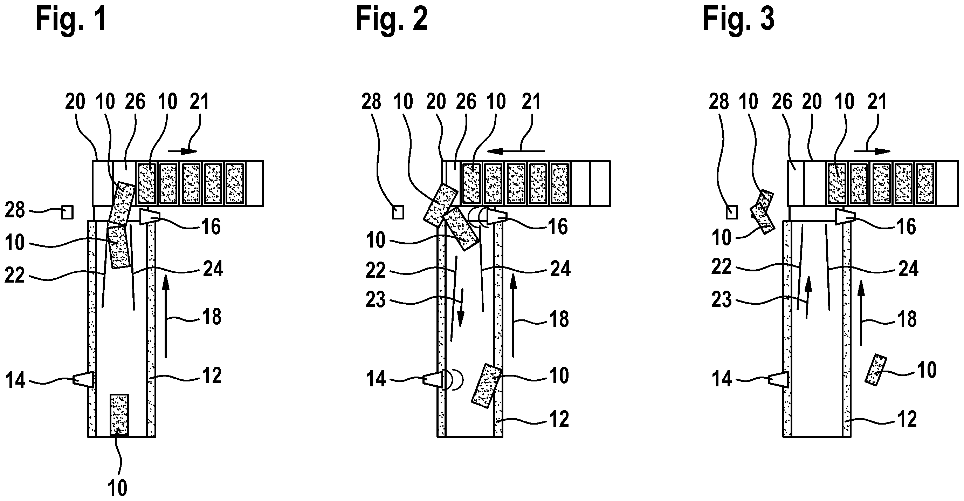

Die beschriebene Vorrichtung arbeitet nun folgender Maßen. Im Normalbetrieb führt die Zuführung 12 Produkte 10 nach Ausrichtung durch die Seitenführungen 22,24 den bereitstehenden Fächern 21 des Transportsystems 20 zu wie in Figur 1 beispielhaft dargestellt.

In der Situation nach Figur 2 detektiert der Sensor 28 einen Produktstau. So könnten sich die Produkte 10 beispielsweise im Zuführbereich verklemmen und gegenseitig blockieren oder auf sonstige Art und Weise eine ordnungsgemäße Befüllung der Fächer 21 verhindern. Bei einem erkannten Produktstau steuert eine nicht gezeigte Steuerung zumindest das Auswurfmittel 16, vorzugsweise beide Auswurfmittel 14, 16, und das Transportsystem 20, und vorzugsweise die Seitenführung 22 an. Zum einen wird das erste Auswurfmittel 14 aktiviert. So werden eventuell noch zugeführte Produkte 10 von der Zuführung 12 entfernt. Beispielhaft ist das Auswurfmittel 14,16 als Düse ausgebildet, welche im Falle der Stauerkennung mit Druckluft beaufschlagt wird. Der Druckluftstoß bewegt das Produkt 10 seitlich bzw. quer zur Zufuhrrichtung 18, sodass es von der Zuführung 12 fällt.

Die Steuerung steuert die Seitenführung 22 so an, dass sie sich entgegen der üblichen Zufuhrrichtung 18 der Zuführung 12 zurückzieht. Dadurch können Produkte 10, die sich im Bereich der Seitenführungen 22,24 befinden, durch das Auswurfmittel 16 seitlich über den Rand der Zuführung 12 hinaus bewegt werden, sodass die sich stauenden Produkte 10 von der Zuführung 12 fallen können, vorzugsweise in nicht gezeigte Behälter.

Auch das weitere Auswurfmittel 16 könnte als vorzugsweise mit Druckluft beaufschlagte Düse ausgebildet sein. Parallel zur Rückwärtsbewegung des Transportsystems 20 befördert auch das Auswurfmittel 16 durch Beaufschlagung der Produkte 10 mit einem Druckluftstoß diese aus dem Kreuzungsbereich. Die zurückgezogene Seitenführung 22 behindert nicht das Ausstoßen der sich stauenden Produkte 10. Die sich stauenden Produkte 10 werden vollständig aus dem Kreuzungsbereich bzw. der Zuführung 12 entfernt.

Parallel hierzu wird das Transportsystem 20 entgegen der im Normalbetrieb üblichen Transportrichtung 21 bewegt. Dadurch drückt auch eine Kante des Faches 26 ein sich stauendes Produkt 10 in Auswurfrichtung. Bei dieser Ansteuerung des Transportsystems 20 dient auch dieses als Auswurfmittel. Anschließend wird die Vorrichtung wieder im Normalbetrieb betätigt. So wird die Seitenführung 22 wieder in den Normalzustand überführt, also parallel angeordnet zu der anderen, nicht bewegten Seitenführung 24. Das Transportsystem 20 wird mit dem nächsten leeren Fächer 26 in die Übergabeposition verfahren und steht zur Aufnahme des nächsten Produkts 10 bereit.

Die Zuführung 12 ist als Förderband, vorzugsweise umlaufend ausgebildet.

Als Auswurfmittel 14,16 können auch andere mechanische Systeme wie Greifer, Schieber oder Ähnliches zum Einsatz kommen. Sie müssen geeignet sein, im erkannten Staufall die Produkte 10 zum einen aus dem Staubereich zu entfernen. Zum anderen sollen sie auch eine Zufuhr weiterer Produkte 10 so lange unterbinden, bis die gestauten Produkte 10 entfernt wurden. Wie beschrieben ist das Transportsystem 20 als Auswurfmittel eingesetzt, indem es gezielt eine mechanische Bewegung auf die Produkte 10 ausübt, so dass diese den Staubereich verlassen.

So sind die Seitenführung(en) in 22,24 nicht zwingend erforderlich. Sollten diese jedoch vorhanden sein, so muss sichergestellt werden, dass durch entsprechende Bewegbarkeit diese ein Entfernen sich stauender Produkte 10 nicht behindern.

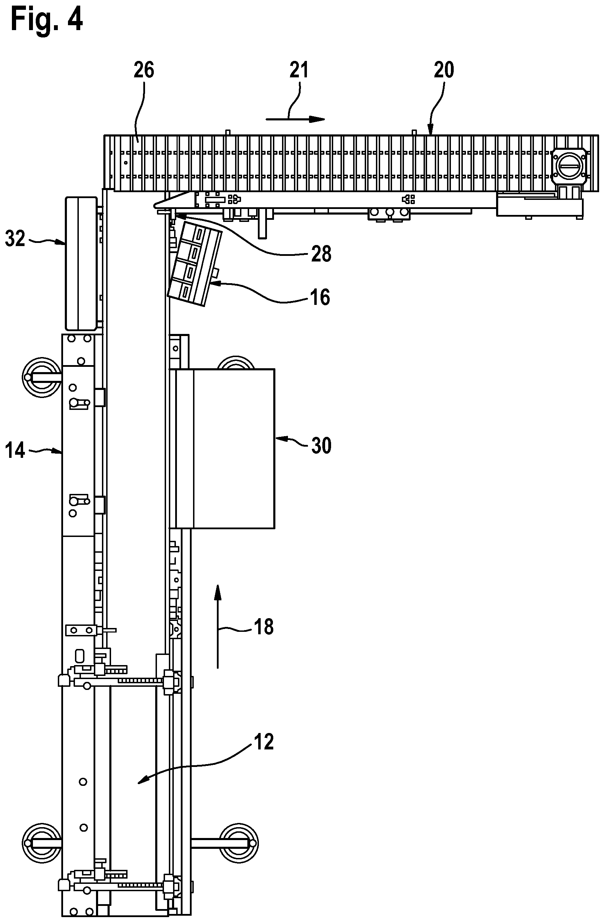

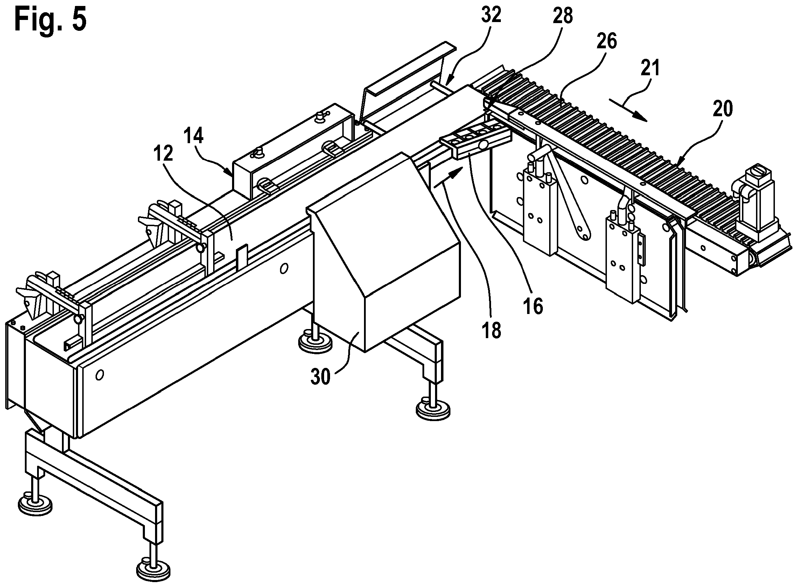

Ein entsprechendes Ausführungsbeispiel ohne Seitenführungen ist in den Figuren 4 und 5 gezeigt. Die Funktionsweise entspricht im wesentlichen den Figuren 1-3. Zusätzlich ist jedoch auf der gegenüberliegenden Seite (dazwischenliegend ist die Zuführung 12 angeordnet) des ersten Auswurfmittels 14 ein Behälter 30 vorgesehen, in den die von dem Auswurfmittel 14 von der Zuführung 12 ausgestoßenen Produkte 10 gelangen und gesammelt werden. Der Behälter 30 grenzt unmittelbar an die Seite der Zuführung 12 an, so dass die Produkte 10 möglichst einfach von der Zuführung 12 entfernt werden können.

Auch der dem weiteren Auswurfmittel 16 gegenüberliegenden Seite (dazwischenliegend ist die Zuführung 12 angeordnet) ist ein weiterer Behälter 32 angeordnet, in dem die von dem weiteren Auswurfmittel 16 von der Zuführung 12 entfernten Produkte 10 gesammelt werden.

Detektiert der Sensor 28 einen Produktstau im Übergabebereich Zwischenzuführung 12 und Transportsystem 20, so wird zum einen das Auswurfmittel 14 aktiviert. Dieses stellt sicher, dass einlaufende Produkte 10 in den gegenüberliegenden Behälter 30 gebracht werden. Dadurch gelangen keine neuen Produkte 10 in den gestauten Übergabebereich. Parallel hierzu wird das weitere Auswurfmittel 16 aktiviert. Es befördert sich stauende Produkte 10 in den gegenüberliegenden Behälter 32. Besonders bevorzugt läuft die Zuführung 12 kontinuierlich weiter. Dadurch wird der übliche Ablauf nicht unterbrochen. Lediglich sich stauende Produkte 10 und während der Behebung des Staus zugeführte Produkte 10 gelangen in die weiteren Behälter 30,32. Diese können anschließend wieder den üblichen Produktionsprozess zugeführt werden.

Das Transportsystem 20 wird in die entgegengesetzte Transportrichtung 21 angesteuert. Dadurch werden im Bereich des Faches 26 befindliche Produkte 10 in Richtung zu dem Behälter 32 bewegt und/oder in den Erfassungsbereich des weiteren Auswurfmittels 16.

Das Verfahren zum Zuführen von Produkten 10 zeichnet sich durch folgende Schritte aus. Der Sensor 28 überwacht zumindest den Übergabebereich zur Erkennung eines Produktstaus. Wird ein Produktstau erkannt, so aktiviert eine nicht gezeigte Steuerung das Auswurfmittel 16, und vorzugsweise das Auswurfmittel 14. Das Transportsystem wird entgegen der Transportrichtung 21 angesteuert. Anschließend wird das Transportsystem 20 in eine Positionsverfahren, in der das nächste zu befüllende Fach 26 sich im Erfassungsbereich der Zuführung 12 befindet. Wenn der Sensor 28 erkennt, dass kein Produktstau den Zuführ Bereich blockiert, werden die Auswurfmittel 14,16 wieder deaktiviert. Die ständig kontinuierlich sich bewegende Zuführung 12 führt nun wieder Produkte 10 dem Transportsystem 20 bzw. dem nächsten leeren Fach 26 zu. Anschließend taktet das Transportsystem 20 nach Befüllen der Fächer 26 weiter.

Die Vorrichtung ist Bestandteil einer Zuführung für unterschiedliche Transportanwendungen, insbesondere in der Verpackungstechnik von beispielsweise Pharmazeutika oder Lebensmittel. Die Verwendung ist hierauf jedoch nicht eingeschränkt.

## Patentansprüche

1. Vorrichtung zum Zuführen von Produkten (10), umfassend zumindest eine als Förderband ausgebildete Zuführung (12), welche Produkte (10) zumindest einem Transportsystem (20) zuführt,
wobei das Transportsystem (20) hierzu entsprechende Fächer zur Aufnahme eines jeweiligen Produkts (10) aufweist, und
die Zuführung (12) und das Transportsystem (20) senkrecht zueinander angeordnet sind und wobei das Transportsystem (20) in einer Transportrichtung bewegbar ist, die senkrecht zu einer Zufuhrrichtung (18) der Zuführung (12) orientiert ist,
zumindest einen Sensor (28) zur Erkennung sich stauender Produkte (10), wobei zumindest ein Auswurfmittel (16) vorgesehen ist zum Entfernen zumindest eines auf der Zuführung (12) befindlichen und sich stauenden Produkts (10),
**dadurch gekennzeichnet,**
**dass** das Auswurfmittel (16) zwischen Zuführung (12) und Transportsystem (20) angeordnet ist,
**dass** die Vorrichtung eine Steuerung umfasst, die bei einem erkannten Produktstau das zumindest eine Auswurfmittel (16) und das Transportmittel (20) ansteuert, und
**dass** zum Entfernen zumindest eines sich stauenden Produkts das Transportsystem (20) in einer vom Normalbetrieb abweichenden Betriebsart durch die Steuerung gesteuert ist, nämlich entgegen der sonst üblichen Transportrichtung (21) bewegt ist.

2. Vorrichtung nach einem der vorhergehenden Ansprüche, **dadurch gekennzeichnet, dass** als Auswurfmittel (14, 16) zumindest eine Düse, vorzugsweise einen Luftstrom erzeugende Düse verwendet ist.

3. Vorrichtung nach dem vorhergehenden Anspruch, **dadurch gekennzeichnet, dass** die als Auswurfmittel (14, 16) verwendete Düse im Falle der Produktstauerkennung mit Druckluft beaufschlagt ist und relativ zu der Zuführung (12) so angeordnet ist, dass ein Druckluftstoss der Düse das Produkt (10) im wesentlichen quer zur Transportrichtung (18) der Zuführung (12) bewegt, so dass das Produkt (12) von der Zuführung (12) fällt.

4. Vorrichtung nach einem der vorhergehenden Ansprüche, **dadurch gekennzeichnet, dass** zumindest ein weiteres Auswurfmittel (14,16) vorgesehen ist, welches entfernt von dem ersten Auswurfmittel (14, 16) angeordnet ist zur Unterbindung der Zuführung weiterer Produkte (10).

5. Vorrichtung nach einem der vorhergehenden Ansprüche, **dadurch gekennzeichnet, dass** während der Aktivierung zumindest eines Auswurfmittels (14,16) die Zuführung (12) aktivierbar ausgebildet ist.

6. Vorrichtung nach einem der vorhergehenden Ansprüche, **dadurch gekennzeichnet, dass** zumindest ein Behälter (30,32) vorgesehen ist zur Aufnahme zumindest des von dem Auswurfmittel (14,16) von der Zuführung (12) entfernten Produkts (10).

7. Vorrichtung nach einem der vorhergehenden Ansprüche, **dadurch gekennzeichnet, dass** das Auswurfmittel (16) so angeordnet ist, dass zumindest ein sich stauendes Produkt (10) entgegengesetzt zur Transportrichtung (21) des Transportmittels (20) im Normalbetrieb ausgestoßen werden kann.

8. Vorrichtung nach einem der vorhergehenden Ansprüche, **dadurch gekennzeichnet, dass** zumindest eine Seitenführung (22, 24) zur Führung zumindest eines auf der Zuführung (12) befindlichen Produkts (10) vorgesehen ist.

9. Vorrichtung nach einem der vorhergehenden Ansprüche, **dadurch gekennzeichnet, dass** zumindest eine Seitenführung (22) beweglich ausgebildet ist und/oder dass nach Entfernen zumindest eines Produkts (10) von der Zuführung (12) die Seitenführung (22) wieder in die Normalposition bewegbar ausgebildet ist.

10. Verfahren zum Zuführen von Produkten (10), wobei zumindest eine als Förderband ausgebildete Zuführung (12) Produkte (10) zumindest einem Transportsystem (20) zuführt, wobei das Transportsystem (20) hierzu entsprechende Fächer zur Aufnahme eines jeweiligen Produkts (10) aufweist, und
die Zuführung (12) und das Transportsystem (20) senkrecht zueinander angeordnet sind und das Transportsystem (20) in einer Transportrichtung bewegt wird, die senkrecht zu einer Zufuhrrichtung (18) der Zuführung (12) orientiert ist,
wobei sich stauende Produkte (10) von einem Sensor (28) erkannt werden und zumindest ein Auswurfmittel (16) zumindest ein auf der Zuführung (12) befindliches und sich stauendes Produkt (10) entfernt,
**dadurch gekennzeichnet,**
**dass** das Auswurfmittel (16) zwischen Zuführung (12) und Transportsystem (20) angeordnet ist, dass
die Vorrichtung eine Steuerung umfasst, die bei einem erkannten Produktstau das zumindest eine Auswurfmittel (16) und das Transportmittel (20) ansteuert und zum Entfernen zumindest eines sich stauenden Produkts das Transportsystem (20) in einer vom Normalbetrieb abweichenden Betriebsart steuert, nämlich derart, dass sich das Transportsystem (20) entgegen der sonst üblichen Transportrichtung (21) bewegt.

11. Verfahren nach dem vorhergehenden Verfahrensanspruch, **dadurch gekennzeichnet dass** ein weiteres Auswurfmittel (14, 16) zumindest ein ankommendes Produkt (10) von der Zuführung (12) entfernt und/oder dass das Auswurfmittel (14,16) zumindest ein zwischen Zuführung (12) und Transportsystem (20) befindliches Produkt (10) von der Zuführung (12) entfernt, und/oder dass eine Seitenführung (22, 24) in eine Position gebracht wird, die das Entfernen des Produkts (10) von der Zuführung (12) ermöglicht.

## Claims

1. A device for feeding products (10), comprising at least one feeder (12) designed as a conveyor belt, which supplies products (10) to at least one transport system (20),
wherein the transport system (20) has corresponding compartments for receiving a respective product (10), and
the feeder (12) and the transport system (20) are arranged perpendicular to one another, and wherein the transport system (20) is movable in a transport direction that is oriented perpendicular to a feed direction (18) of the feeder (12), at least one sensor (28) for detecting accumulating products (10), wherein at least one ejection means (16) is provided for removing at least one product (10) that is located on the feeder (12) and is accumulating, **characterized in that** the ejection means (16) is arranged between the feeder (12) and the transport system (20), **in that** the device comprises a controller that, when the product bottleneck is detected, activates the at least one ejection means (16) and the transport means (20), and **in that** the transport system (20) is controlled by the controller in a mode of operation deviating from normal operation for removing at least one accumulating product, namely moved counter to the otherwise usual transport direction (21).

2. The device according to any of the preceding claims,
**characterized in that** at least one nozzle, preferably a nozzle generating an air flow, is used as the ejection means (14, 16).

3. The device according to the preceding claim, **characterized in that** the nozzle used as ejection means (14, 16) is subjected to compressed air in the event of product bottleneck detection and is arranged relative to the feeder (12), so that a compressed air blast of the nozzle moves the product (10) substantially transversely to the transport direction (18) of the feeder (12), so that the product (12) falls of the feeder (12).

4. The device according to any of the preceding claims,
**characterized in that** at least one further ejection means (14, 16) is provided, which is arranged apart from the first ejection means (14, 16) for preventing feeding further products (10).

5. The device according to any of the preceding claims,
**characterized in that** during the activation of at least one ejection means (14, 16), the feeder (12) is designed to be activatable.

6. The device according to any of the preceding claims,
**characterized in that** at least one container (30, 32) is provided for receiving at least the product (10) removed from the feeder (12) by the ejection means (14, 16).

7. The device according to any of the preceding claims,
**characterized in that** the ejection means (16) is arranged such that at least one accumulating product (10) can be ejected, in normal operation, counter to the transport direction (21) of the transport means (20).

8. The device according to any of the preceding claims,
**characterized in that** at least one side guide (22, 24) is provided for guiding at least one product (10) located on the feeder (12).

9. The device according to any of the preceding claims,
**characterized in that** at least one side guide (22) is designed to be movable and/or that after removal of at least one product (10) from the feeder (12), the side guide (22) is designed to be movable again into the normal position.

10. A method for feeding products (10), wherein at least one feeder (12) designed as a conveyor belt feeds products (10) to at least one transport system (20), wherein the transport system (20) has corresponding compartments for receiving a respective product (10), and
the feeder (12) and the transport system (20) is arranged perpendicular to one another and the transport system (20) is moved in a transport direction that is oriented perpendicular to a feed direction (18) of the feeder (12),
wherein accumulating products (10) are detected by a sensor (28), and at least one ejection means (16) removes at least one product (10) located on the feeder (12) and **characterized in that** the ejection means (16) is arranged between the feeder (12) and the transport system (20), **in that** the device comprises a controller that, when the product bottleneck is detected, activates the at least one ejection means (16) and the transport means (20) and controls the transport system (20) in an operating mode deviating from normal operation for removing at least one accumulating product, specifically such that the transport system (20) moves counter the otherwise usual transport direction (21).

11. The method according to the preceding method claim,
**characterized in that** a further ejection means (14, 16) removes at least one incoming product (10) from the feed (12) and/or that the ejection means (14,16) removes at least one product (10) located between the feed (12) and the transport system (20) from the feed (12), and/or that a side guide (22, 24) is brought into a position that enables the removal of the product (10) from the feed (12).

## Revendications

1. Dispositif permettant l'alimentation de produits (10), comprenant au moins une alimentation (12) réalisée en tant que bande d'acheminement et qui alimente au moins un système de transport (20) en produits (10),
dans lequel le système de transport (20) présente des compartiments correspondants pour la réception d'un produit (10) respectif, et
l'alimentation (12) et le système de transport (20) sont disposés perpendiculairement l'un à l'autre et le système de transport (20) pouvant être déplacé dans un sens de transport orienté perpendiculairement à un sens d'alimentation (18) de l'alimentation (12), au moins un capteur (28) permettant la détection de produits (10) bloquants, au moins un moyen d'éjection (16) étant prévu pour l'enlèvement d'au moins un produit (10) bloquant se trouvant sur l'alimentation (12), **caractérisé en ce que** le moyen d'éjection (16) est disposé entre l'alimentation (12) et le système de transport (20), **en ce que** le dispositif comprend une commande qui, en cas de détection de produit bloquant, commande l'au moins un moyen d'éjection (16) et le moyen de transport (20), **et en ce que**, pour l'enlèvement d'au moins un produit bloquant, le système de transport (20) est commandé par la commande dans un mode de fonctionnement différent du fonctionnement normal, à savoir est déplacé à l'opposé du sens de transport (21) autrement habituel.

2. Dispositif selon l'une des revendications précédentes,
**caractérisé en ce qu'**au moins une buse, de préférence une buse produisant un flux d'air, est utilisée comme moyen d'éjection (14, 16).

3. Dispositif selon la revendication précédente, **caractérisé en ce que** la buse utilisée comme moyen d'éjection (14, 16) est approvisionnée en air comprimé en cas de détection de produit bloquant et est disposée par rapport à l'alimentation (12) de telle sorte qu'un jet d'air comprimé de la buse déplace le produit (10) sensiblement transversalement au sens de transport (18) de l'alimentation (12), de sorte que le produit (12) tombe de l'alimentation (12).

4. Dispositif selon l'une des revendications précédentes,
**caractérisé en ce qu'**au moins un moyen d'éjection (14, 16) supplémentaire est prévu, lequel est disposé à distance du premier moyen d'éjection (14, 16) pour empêcher l'alimentation de produits (10) supplémentaires.

5. Dispositif selon l'une des revendications précédentes,
**caractérisé en ce que**, pendant l'activation d'au moins un moyen d'éjection (14, 16), l'alimentation (12) peut être activée.

6. Dispositif selon l'une des revendications précédentes,
**caractérisé en ce qu'**au moins un récipient (30, 32) est prévu pour la réception d'au moins le produit (10) enlevé de l'alimentation (12) au moyen du moyen d'éjection (14, 16).

7. Dispositif selon l'une des revendications précédentes,
**caractérisé en ce que** le moyen d'éjection (16) est disposé de telle sorte qu'au moins un produit (10) bloquant peut être expulsé, lors du fonctionnement normal, dans un sens opposé au sens de transport (21) du moyen de transport (20).

8. Dispositif selon l'une des revendications précédentes,
**caractérisé en ce qu'**au moins un guidage latéral (22, 24) est prévu pour le guidage d'au moins un produit (10) se trouvant sur l'alimentation (12).

9. Dispositif selon l'une des revendications précédentes,
**caractérisé en ce qu'**au moins un guidage latéral (22) est mobile **et/ou en ce qu'**après l'enlèvement d'au moins un produit (10) de l'alimentation (12), le guidage latéral (22) peut être déplacé de nouveau dans la position normale.

10. Procédé permettant l'alimentation de produits (10), au moins une alimentation (12) réalisée en tant que bande d'acheminement alimentant au moins un système de transport (20) en produits (10), dans lequel le système de transport (20) présente des compartiments correspondants pour la réception d'un produit (10) respectif, et
l'alimentation (12) et le système de transport (20) sont disposés perpendiculairement l'un à l'autre et le système de transport (20) est déplacé dans un sens de transport orienté perpendiculairement à un sens d'alimentation (18) de l'alimentation (12),
dans lequel des produits (10) bloquants sont détectés par un capteur (28) et au moins un moyen d'éjection (16) enlève au moins un produit (10) bloquant se trouvant sur l'alimentation (12), **caractérisé en ce que** le moyen d'éjection (16) est disposé entre l'alimentation (12) et le système de transport (20), **en ce que** le dispositif comprend une commande qui, en cas de détection de produit bloquant, commande l'au moins un moyen d'éjection (16) et le moyen de transport (20) et, pour l'enlèvement d'au moins un produit bloquant, commande le système de transport (20) dans un mode de fonctionnement différent du fonctionnement normal, à savoir de telle sorte que le système de transport (20) se déplace à l'opposé du sens de transport (21) autrement habituel.

11. Procédé selon la revendication de procédé précédente, **caractérisé en ce qu'**un moyen d'éjection (14, 16) supplémentaire éloigne au moins un produit (10) entrant de l'alimentation (12) **et/ou en ce que** le moyen d'éjection (14, 16) éloigne au moins un produit (10) se trouvant entre l'alimentation (12) et le système de transport (20) de l'alimentation (12), **et/ou en ce qu'**un guidage latéral (22, 24) est placé dans une position permettant l'enlèvement du produit (10) de l'alimentation (12).
